(19) Europäisches Patentamt / European Patent Office / Office européen des brevets

(11) **EP 4 403 671 A1**

(12) **EUROPEAN PATENT APPLICATION**

(43) Date of publication:
**24.07.2024 Bulletin 2024/30**

(51) International Patent Classification (IPC):
***C25B 1/04*** *(2021.01)*     ***C25B 15/023*** *(2021.01)*
***C25B 15/06*** *(2006.01)*

(21) Application number: **23211989.1**

(22) Date of filing: **24.11.2023**

(52) Cooperative Patent Classification (CPC):
**C25B 1/04; C25B 15/023; C25B 15/06**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.01.2023 JP 2023003067**

(71) Applicant: **TOYOTA JIDOSHA KABUSHIKI
KAISHA**
**Toyota-shi, Aichi-ken, 471-8571 (JP)**

(72) Inventor: **KITAMURA, Nobuyuki**
**Toyota-shi, 471-8571 (JP)**

(74) Representative: **J A Kemp LLP**
**80 Turnmill Street**
**London EC1M 5QU (GB)**

(54) **WATER ELECTROLYSIS SYSTEM**

(57)     Provided is a water electrolysis system (10) that obtains hydrogen by water electrolysis with a water electrolysis cell (13), the water electrolysis system (10) including a water electrolysis stack (12) having a plurality of the water electrolysis cells (13), a water supply side passage (30) that supplies water to the water electrolysis stack (12), a hydrogen side passage (40) that discharges the hydrogen obtained in the water electrolysis stack (12) from the water electrolysis stack (12), a plurality of voltage sensors (22a) that measures voltages for the respective water electrolysis cells (13) or for each group of the water electrolysis cells (13), and a control device (23) configured to acquire a voltage from each of the voltage sensors (22a), determine whether the voltage is lower than a predetermined value and notify the water electrolysis cell (13) has a failure when it is determined that the voltage is lower than a predetermined value .

**FIG. 1**

**Description**

BACKGROUND OF THE INVENTION

1. Field of the Invention

The present disclosure relates to a water electrolysis system.

2. Description of Related Art

In Japanese Unexamined Patent Application Publication No. 2020-084259, it is disclosed that a water electrolysis device includes a control device that controls operations of a plurality of PEM type water electrolysis stacks, and this control device carries out calculations to determine a state of deterioration from acquired resistance value and temperature, and issues a warning to prompt the replacement of a stack that has undergone a leveling of deterioration and reversible deterioration has progressed

SUMMARY OF THE INVENTION

The related art can only detect degradation once it has reached a level in which changes in the resistance value and temperature of a water electrolysis stack become apparent.
The present disclosure provides a water electrolysis system capable of detecting a failure with higher accuracy.
An aspect of the invention relates to a water electrolysis system that obtains hydrogen by water electrolysis with a water electrolysis cell, the water electrolysis system including a water electrolysis stack, a water supply side passage, a hydrogen side passage, a plurality of voltage sensors, and a control device. The water electrolysis stack has a plurality of the water electrolysis cells. The water supply side passage that supplies water to the water electrolysis stack. The hydrogen side passage that discharges the hydrogen obtained in the water electrolysis stack from the water electrolysis stack. The voltage sensors measure voltages for the respective water electrolysis cells or for each group of the water electrolysis cells. The control device is configured to acquire a voltage from each of the voltage sensors, determine whether the voltage is lower than a predetermined value and notify that the water electrolysis cell has a failure when it is determined that the voltage is lower than the predetermined value.
In the aspect, the predetermined value may be a value of a voltage obtained from an equivalent circuit of the water electrolysis cell.
In the aspect, the control device may be configured to determine whether the voltage is lower than the predetermined value at a start of operation of the water electrolysis system, the predetermined value may be a normal water electrolysis cell voltage corresponding to a current acquired in advance, and the control device may be configured to compare the normal water electrolysis cell voltage with the voltage obtained from the voltage sensor, and determine that a short-circuit abnormality has occurred in the water electrolysis cell when the voltage is lower than an allowable voltage.
In the aspect, the control device may be configured to determine whether the voltage is lower than the predetermined value during a steady operation of the water electrolysis system, the predetermined value may be a lower limit of a width of an I-V characteristic of the water electrolysis cell that is acquired in advance, and the control device may be configured to determine that a short-circuit abnormality has occurred in the water electrolysis cell when a voltage lower than the lower limit of the width of the I-V characteristic is detected.
In the aspect, the control device may be configured to stop an operation of the water electrolysis system when a voltage higher than a predetermined threshold is detected, and the predetermined threshold may be a value higher than an upper limit of the width of the I-V characteristic.
In the aspect, the control device may be configured to continue the operation of the water electrolysis system when a voltage below the predetermined threshold and above the upper limit of the width of the I-V characteristic is detected.
In the aspect, the control device may be configured to stop the operation of the water electrolysis system when it is determined that the short-circuit abnormality occurs in the water electrolysis cell.
With the aspect of the present disclosure, failures in the water electrolysis stack can be detected more accurately at an early stage.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a conceptual diagram for illustrating a configuration of a water electrolysis system 10;
FIG. 2 is a conceptual diagram for illustrating a configuration of water electrolysis device 11;
FIG. 3 is a conceptual diagram for illustrating a configuration of a water electrolysis cell 13;
FIG. 4 is a conceptual diagram of a computer 23 (control device 23);
FIG. 5 is a diagram for illustrating a flow of control S10 during an electrolysis operation of the water electrolysis system;
FIG. 6 is a diagram for illustrating an equivalent circuit of the water electrolysis cell;
FIG. 7 is a diagram for illustrating a relationship between a calculated voltage and a measured voltage;
FIG. 8 is a diagram for illustrating a I-V characteristic of the water electrolysis cell; and
FIG. 9 is a diagram for illustrating a flow of control S30 during a stop process of the water electrolysis system.

DETAILED DESCRIPTION OF EMBODIMENTS

1. Configuration of Water Electrolysis System

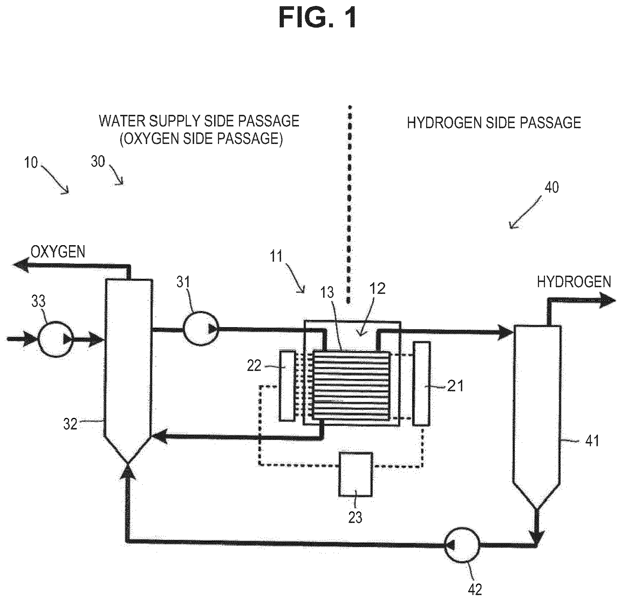

FIG. 1 conceptually illustrates a water electrolysis system 10 according to one embodiment.
In this embodiment, the water electrolysis system 10 has a water electrolysis device 11, a water supply side passage (oxygen side passage) 30, and a hydrogen side passage 40. In the water electrolysis system 10, water is supplied from the water supply side passage 30 to a water electrolysis stack 12 provided in the water electrolysis device 11 and energized to decompose the water into hydrogen and oxygen, and then hydrogen is obtained and discharged from the water electrolysis stack 12 to the hydrogen side passage 40.

1.1. Water Electrolysis Device

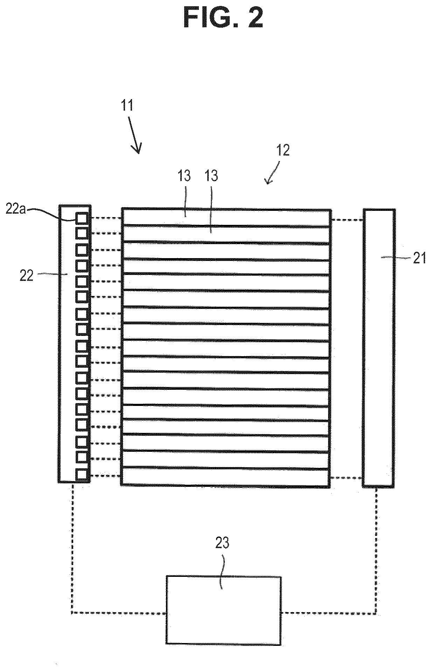

The water electrolysis device 11 includes the water electrolysis stack 12, a power supply 21, a cell monitor 22, and a control device 23 in this embodiment. Each element will be described below. FIG. 2 conceptually illustrates a configuration of the water electrolysis device 11.

1.1.1. Water Electrolysis Stack

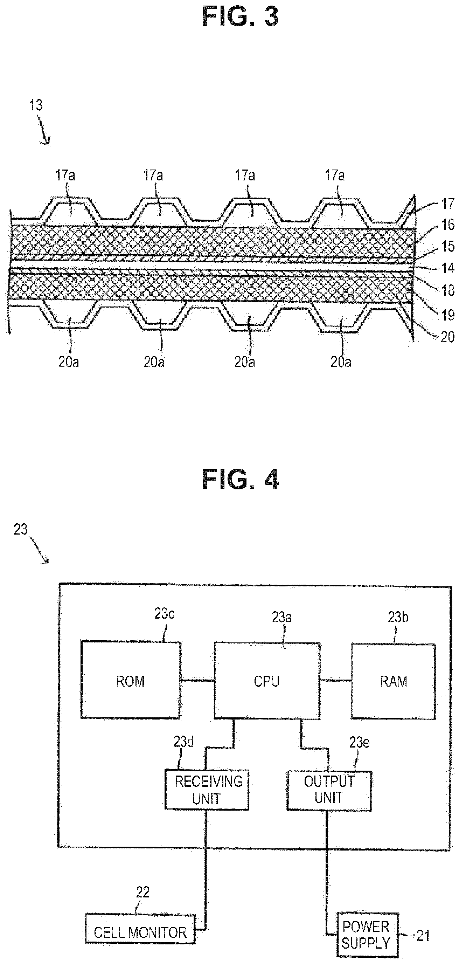

The water electrolysis stack 12 is formed by stacking a plurality of water electrolysis cells 13. The water electrolysis cell 13 is a unit element that decomposes water into hydrogen and oxygen. FIG. 3 illustrates a part of a cross section of one water electrolysis cell 13.
As is well known, the water electrolysis cell 13 is composed of a plurality of layers in this embodiment, one of which serves as an oxygen generating electrode (anode) and the other serves as a hydrogen generating electrode (cathode) with a solid polymer electrolyte membrane 14 interposed therebetween.
A material constituting the solid polymer electrolyte membrane 14 is a solid polymer material, and examples thereof include a proton-conducting ion-exchange membrane made of a fluorine-based resin, a hydrocarbon-based resin material, or the like. It exhibits good proton conductivity (electrical conductivity) in wet conditions. A more specific example is Nafion (registered trademark), which is a perfluorosulfonic acid membrane.
The oxygen generating electrode (anode) includes an oxygen electrode catalyst layer 15, an oxygen electrode gas diffusion layer 16, and an oxygen electrode separator 17 in this order from the solid polymer electrolyte membrane 14 side.
The oxygen electrode catalyst layer 15 is a layer provided with an electrode catalyst containing at least one noble metal catalyst such as Pt, Ru, and Ir and oxides thereof.
The oxygen electrode gas diffusion layer 16 is made of a member having gas permeability and electrical conductivity. Specifically, a porous conductive member made of metal fibers, metal particles, or the like can be exemplified.
The oxygen electrode separator 17 includes a flow path 17a through which water supplied to the oxygen electrode gas diffusion layer 16, generated oxygen, and surplus water flow.
The hydrogen generating electrode (cathode) is provided on a surface of the solid polymer electrolyte membrane 14 opposite to a surface on which the oxygen generating electrode is arranged, and a hydrogen electrode catalyst layer 18, a hydrogen electrode gas diffusion layer 19, and a hydrogen electrode separator 20 are provided in this order from the solid polymer electrolyte membrane 14 side.
For example, a layer containing Pt or the like can be exemplified as the hydrogen electrode catalyst layer 18.
The hydrogen electrode gas diffusion layer 19 consists of a member having gas permeability and electrical conductivity. Specifically, porous members such as carbon cloth and carbon paper can be exemplified.
The hydrogen electrode separator 20 is a member including a flow path 20a through which generated hydrogen and accompanying water flow.
The water ($H_2O$) supplied from the water supply side passage 30 to the flow path 17a of the oxygen electrode separator 17 is decomposed into oxygen, electrons, and protons ($H^+$) in the oxygen electrode catalyst layer 15 to which a potential is applied by energizing from the power supply 21 between the oxygen generating electrode and the hydrogen generating electrode. In this case, the protons pass through the solid polymer electrolyte membrane 14 and move to the hydrogen electrode catalyst layer 18. The electrons separated by the oxygen electrode catalyst layer 15 reach the hydrogen electrode catalyst layer 18 through an external circuit. Then, protons receive electrons in the hydrogen electrode catalyst layer 18 to generate hydrogen. The generated hydrogen and accompanying water reach the hydrogen electrode separator 20, are discharged from the flow path 20a, and move to the hydrogen side passage 40. The oxygen separated by the oxygen electrode catalyst layer 15 and surplus water reach the oxygen electrode separator 17, are discharged from the flow path 17a, and move back to the water supply side passage 30.

### 1.1.2. Power Supply

The power supply 21 is a device that applies a voltage to the water electrolysis cell 13 to advance water electrolysis as described above, and a device provided in a known water electrolysis system can be applied as the power supply 21. However, in this embodiment, the power supply 21 can communicate with the control device 23 so that the control device 23 can control the application of the voltage.

### 1.1.3. Cell Monitor

The cell monitor 22 is a device that measures the voltage applied to the water electrolysis cell 13. It is not particularly limited as long as it can specifically measure the voltage of the water electrolysis cell 13, and a known device can be used. For example, a voltage sensor may be provided.

The cell monitor 22 may measure the voltage of each of the plurality of water electrolysis cells 13, or may measure the voltage of two or more water electrolysis cells 13 collectively. However, when measuring the voltage of two or more water electrolysis cells 13 collectively, since the voltages that are supposed to be applied to respective water electrolysis cells 13 are averaged according to the collected number, there is a possibility of causing a decrease in accuracy. Therefore, it is most preferable to obtain a voltage in each water electrolysis cell 13, and when the voltages of two or more water electrolysis cells are collectively obtained, the number of water electrolysis cells is preferably five or less. It is also possible to individually obtain a voltage only for the water electrolysis cells at both ends in a stacking direction in which abnormalities are likely to be detected, and to collectively obtain a voltage for two or more water electrolysis cells arranged between them.

The cell monitor 22 is configured to be communicable such that the obtained voltage data can be converted into a signal and transmitted to the control device 23.

### 1.1.4. Control Device

The control device 23 is a device that controls the water electrolysis system 10. The aspect of the control device 23 is not particularly limited, but typically it can be configured by a computer. FIG. 4 conceptually illustrates a configuration example of a computer 23 as the control device 23.

The computer 23 includes a central processing unit (CPU) 23a which is a processor, a random access memory (RAM) 23b functioning as a work area, a read-only memory (ROM) 23c as a storage medium, a receiving unit 23d which is an interface for receiving information in the computer 23 regardless of whether it is wired or wireless, and an output unit 23e which is an interface used to send information from the computer 23 to the outside regardless of whether it is wired or wireless.

The cell monitor 22 is communicably connected to the receiving unit 23d, and is configured to receive the voltage of the water electrolysis cell 13 as a signal.

On the other hand, the power supply 21 is communicably connected to the output unit 23e, and is configured to be able to control the voltage applied to the water electrolysis cell 13.

The computer 23 stores a computer program that executes specific instructions for each process for control performed in the water electrolysis system 10. In the computer 23, the CPU 23a, the RAM 23b, and the ROM 23c as hardware resources cooperate with the computer program. Specifically, the CPU 23a implements the functions by executing the computer program recorded in the ROM 23c in the RAM 23b functioning as a work area based on the signal representing the voltage of the water electrolysis cell 13 acquired from the cell monitor 22 via the receiving unit 23d. Information acquired or generated by the CPU 23a is stored in the RAM 23b. Then, based on the obtained result, a command is transmitted via the output unit 23e, as necessary.

Specific contents of control of the water electrolysis system 10 will be described below.

1.2. Water Supply Side Passage (Oxygen Side Passage)

The water supply side passage (oxygen side passage) 30 is a path including piping that supplies water to the water electrolysis cells 13 of the water electrolysis stack 12 to obtain oxygen.

In this embodiment, water is supplied toward the water electrolysis stack 12 by a pump 31 in the water supply side passage 30. A cooler for cooling water or an ion exchanger that removes ions contained in water may be arranged between the pump 31 and the water electrolysis stack 12, as necessary.

Further, in the water supply side passage 30, oxygen generated in the water electrolysis stack 12 and unused water are discharged from the water electrolysis stack 12 and supplied to a gas-liquid separator 32. Water and oxygen are separated in the gas-liquid separator 32, the separated oxygen is discharged, and the water is supplied to the pump 31 again. In addition, insufficient water is supplied from a pump 33 to the gas-liquid separator 32.

Each device described above is connected by piping to form a fluid passage. In addition to the above, known devices are arranged in the water supply side passage 30, as necessary.

1.3. Hydrogen Side Passage

The hydrogen side passage 40 is a passage including piping for taking out hydrogen separated in the water electrolysis stack 12. On the hydrogen side passage 40, hydrogen and water (accompanying water) discharged from the water electrolysis cell 13 of the water electrolysis stack 12 are supplied to a gas-liquid separator 41. Water and hydrogen are separated in the gas-liquid separator 41. The hydrogen separated by the gas-liquid separator 41 is dehumidified and stored in a tank. The water separated by the gas-liquid separator 41 is sent to the gas-liquid separator 32 of the water supply side passage 30 by a pump 42 and reused. In this case, if necessary, this water may pass through an ion separator before reaching the gas-liquid separator 32.

In the hydrogen side passage, these devices are connected by piping. In the hydrogen side passage 40, known devices other than those described above are arranged, as necessary.

2. Control of Water Electrolysis System

The performance of the water electrolysis system depends on the characteristics of the water electrolysis cell, and when the deteriorated water electrolysis cell continues to be used, the power consumption in hydrogen production will increase. In order to avoid such a situation, control is performed based on the voltage of the water electrolysis cell 13 obtained from the cell monitor 22 in comparison with the characteristics preset by the control device 23. A specific description will be given below.

2.1. During Electrolytic Operation (at Start of Operation and during Steady Operation)

Scenes in which the water electrolysis system 10 is operated (electrolytic operation) while water electrolysis is being performed by applying a voltage to the water electrolysis cell include the start of operation (from startup to steady operation) of the water electrolysis system 10 and a steady operation.

At the start of operation of the water electrolysis system 10, the water electrolysis stack 12 needs to inject charges into the water electrolysis cells, which have a large structural capacitance, to charge them up to the electrolysis potential. When this charging is performed at a low speed, cross leakage (hydrogen generated on the hydrogen generating electrode side in the water electrolysis cell leaking to the oxygen generating electrode side) is likely to occur, so it is preferable to perform this charging rapidly. On the other hand, when the water electrolysis cell 13 is likely to have a failure such as a short circuit, rapid charging should be avoided. Therefore, in this embodiment, during the start of operation (from the startup of the water electrolysis system to steady operation), while rapidly increasing the current, the cell voltage estimated by the charging voltage simulation based on a preset capacitance of the water electrolysis cell is monitored for a voltage drop that indicates signs of a short circuit, and it is determined whether an abnormality has occurred.

On the other hand, after the voltage of the water electrolysis cell has reached a voltage of the steady operation due to charging at the start of operation, it is determined whether deterioration has occurred by comparing the preset normal I-V characteristics with the measured voltage.

An example will be described below.

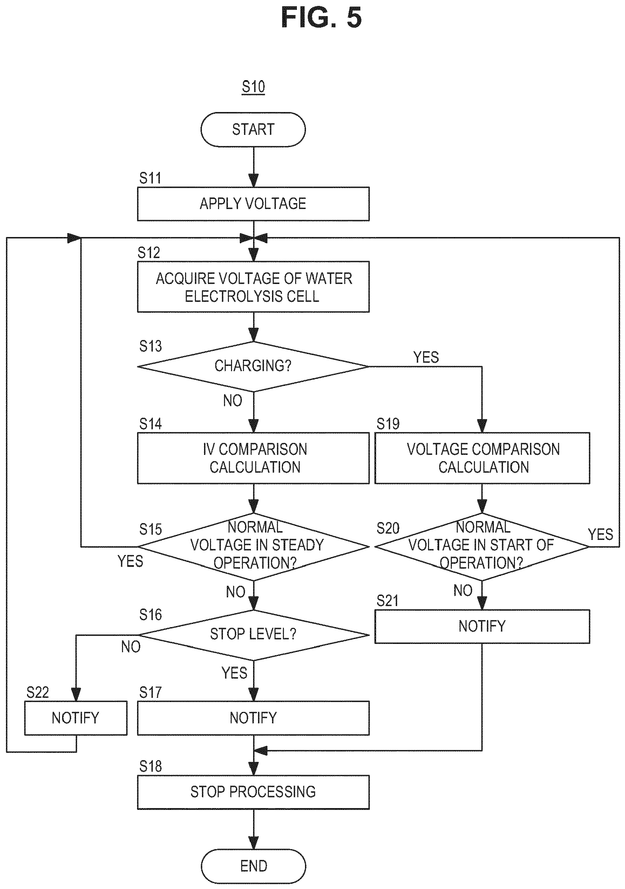

FIG. 5 illustrates a flow of control S10 of the water electrolysis system 10 during electrolysis operation according to one embodiment. As can be seen from FIG. 5, the control S10 has steps S11 to S22. In this embodiment, the computer program stored in the control device 23 described above is configured to serve as specific instructions to the computer for executing each step of the control S10.

2.1.1. Step S11

A voltage is applied to the water electrolysis cell 13 by the power supply 21 in step S11. This voltage is applied in a predetermined manner. In this case, the voltage is increased in time series at the start of operation, and after reaching the voltage for the steady operation, the voltage for steady operation is maintained. Accordingly, in control S10, when voltage application is started in step S11, the voltage is controlled by the control device 23 in a predetermined manner unless stop processing S18 is performed as described below.

2.1.2. Step S12

In step S12, the cell monitor 22 acquires the voltage of the water electrolysis cell 13. Here, the voltage is acquired for each group of a plurality of voltage sensors 22a. The acquired voltage data is transmitted to the control device 23 as a signal.

As described above, in this embodiment, the voltage is acquired for each of the water electrolysis cells 13 or for each group of the plurality of water electrolysis cells, and the voltage of the water electrolysis cell 13 is acquired for each stacked position.

2.1.3. Step S13

In step S13, it is determined from the voltage acquired in step S12 whether charging is currently being performed (whether it is at the start of operation). Since the voltage has not yet reached the voltage for the steady operation during charging, whether charging is being performed can be determined from the value of the voltage.

When the voltage has not yet reached the voltage for the steady operation, it is at the start of operation, so the determination is Yes and the process proceeds to step S19. On the other hand, when the voltage has reached the voltage for the steady operation, the determination is No and the process proceeds to step S14.

2.1.4. Step S19

In step S19, when it is determined in step S13 that charging is currently being performed, calculation is performed to determine whether the voltage is a normal value. Although a device that determines whether the voltage is a normal value is not particularly limited, it can be performed, for example, as follows.

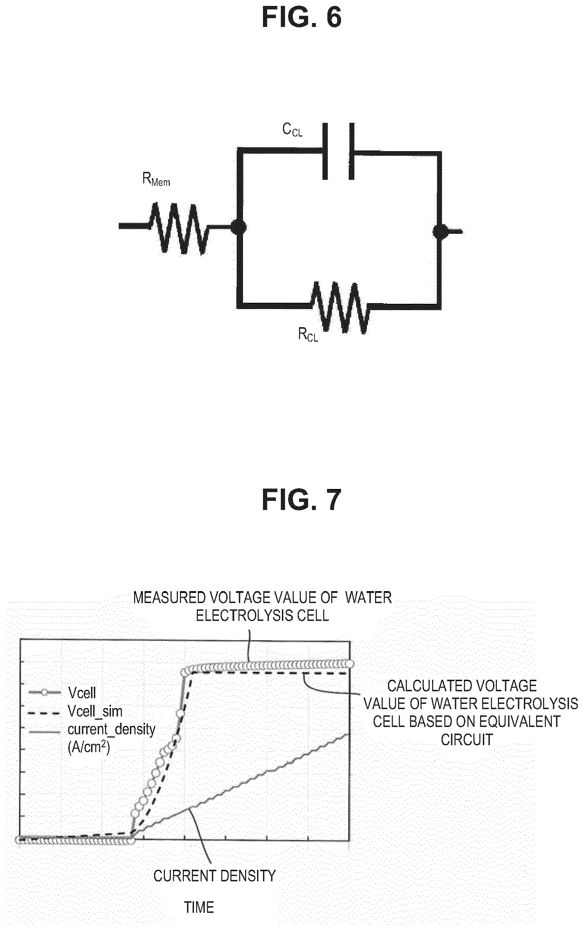

FIG. 6 illustrates an equivalent circuit of the water electrolysis cell 13 during charging. In FIG. 6, $R_{Mem}$ represents the proton transfer resistance of the solid polymer electrolyte membrane 14, $R_{CL}$ the catalytic reaction resistance, and $C_{CL}$ the electric double layer capacity. According to this equivalent circuit, a voltage $V_{cell}$ applied to the water electrolysis cell during charging can be expressed by the following equation (1) where $I_{cell}$ is set as the current consumption of the water electrolysis cell, and this voltage can be treated as a normal value.

$$V_{cell} = R_{Mem}I_{cell} + \int \frac{1}{C_{CL}} I_{cell}dt \qquad (1)$$

FIG. 7 illustrates, as an example, the result of comparison between the measured voltage value of the water electrolysis cell and the calculated voltage value of the water electrolysis cell obtained from the equivalent circuit of equation (1) for each hour. As can be seen from FIG. 7, the voltages calculated by the equivalent circuit follow the actual voltages. By setting a certain allowable range for error in the voltage calculation value, it is possible to determine whether the voltage of the water electrolysis cell at that point in time is normal based on the calculation value of the equivalent circuit.

Thus, in step S19, the voltage of the water electrolysis cell, which is a normal value, is compared with the voltage of the water electrolysis cell acquired in step S12.

In the above, it is described that normal values are obtained by equivalent circuit calculation. However, it is not limited to this, and voltages in a normal state corresponding to the currents acquired in advance by a test or the like may be obtained, stored the voltages as a database in the control device 23 as a mapping, for example, and compared with the measured values as normal values.

2.1.5. Step S20, Step S21

In step S20, as a result of comparison in step S19, it is determined whether the voltage of the water electrolysis cell at the start of operation is within a normal range. In particular, when the voltage of the water electrolysis cell obtained in step S12 is lower than a range of normal values for the normal voltage, there is a high possibility that the water electrolysis cell is short-circuited. Thus, it is preferable to avoid continuing the voltage application. On the other hand, when the voltage exceeds a certain range and is high, it is preferable to suspect an abnormality in the cell monitor and prompt inspection.

In step S20, when the voltage of the water electrolysis cell obtained in step S12 is within the range of normal values, the determination is Yes, and the process returns to step S12.

On the other hand, in step S20, when the voltage of the water electrolysis cell obtained in step S12 is out of the range of normal values, it is determined as No, and the process proceeds to step S21 and a notification is given. After the notification is given in step S21, the process proceeds to step S18 to perform stop processing. Step S18 will be described below. Here, the method of notification in step S21 is not particularly limited. For example, an image display device (not illustrated) displays that the water electrolysis cell 13 has a failure and the location information (ID, or the like) of the water electrolysis cell. Besides, or in addition to this, notification by sound or voice may be made.

2.1.6. Step S14

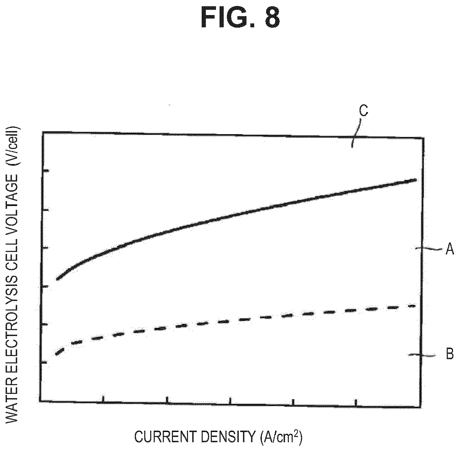

In step S14, in response to the determination in step S13 that the water electrolysis system 10 has completed the start of operation and entered the steady operation, from the voltage of each water electrolysis cell obtained in step S12, it is calculated whether the voltage of each water electrolysis cell exceeds a reference value. Here, the reference value is determined from the "a voltage per water electrolysis cell (V/cell) corresponding to a current density (A/cm$^2$)" (I-V characteristic) obtained in advance. When the voltage is measured collectively for the water electrolysis cells, it is the value obtained by dividing the obtained voltage by the number of water electrolysis cells collectively. FIG. 8 illustrates one example of the I-V characteristic. Here, a range between the dashed line and the solid line indicated by A in FIG. 8 is the voltage of the reference value. In a range of B, which is a voltage lower than this, it is possible to presume a short-circuit failure in the water electrolysis cell. Also, in a range of C, which is a voltage higher than this, it is presumed that there is an overvoltage failure, and there is concern about deterioration of the water electrolysis cell.

2.1.7. Step S15

In step S15, as a result of the comparison in step S14, it is determined whether the voltage of the water electrolysis cell during the steady operation is within the normal range. As described above, when the voltage of the water electrolysis cell obtained in step S12 is lower than the normal range with respect to the voltage within the range of the reference value, there is a high possibility that the water electrolysis cell is short-circuited, so it is preferable to avoid continuing the voltage application. On the other hand, when the voltage of the water electrolysis cell obtained in step S12 is higher than the normal range, the deterioration of the water electrolysis cell is a concern, and depending on the degree of deterioration, it is preferable to avoid continuing the voltage application.

In step S15, the water electrolysis cells 13 of which the voltages meet the reference value are considered to be free from deterioration or failure, so the determination is Yes, and the process returns to step S12.

In step S15, the water electrolysis cells 13 of which the voltages are out of the range of the reference values are determined as No, and the process proceeds to step S16.

2.1.8. Step S16, Step S17, Step S22

In step S16, it is determined whether the water electrolysis system 10 needs to be stopped for the water electrolysis cell for which the voltage of the water electrolysis cell has deviated from the range of the reference value and has been determined as No in step S15.

When the voltage of the water electrolysis cell deviates from the range of the reference value to the lower side, as described above, it is assumed that the water electrolysis cell is short-circuited, so it is better to stop the water electrolysis system and the determination in step S16 is Yes. Thus, the process proceeds to step S17 to notify that effect, and then proceeds to step S18. The notification in step S17 can be considered in the same manner as in step S21.

On the other hand, when the voltage of the water electrolysis cell deviates from the range of the reference value to the higher side, deterioration of the water electrolysis cell is presumed as described above. Since deterioration of the water electrolysis cell does not necessarily require immediate stoppage of the water electrolysis system, it is preferable to set a threshold. In other words, at a voltage that does not exceed the threshold, deterioration of the water electrolysis cell is presumed, but the voltage range is considered to be not enough to stop the entire water electrolysis system. Therefore, the process returns to step S12 after the determination in step S16 is No and notified that effect in step S22. The notification in step S22 in this case is not particularly limited, and it can be mentioned that there is no need to stop the water electrolysis system even though there is deterioration. The notification method can be considered to be the same as in step S21 described above.

On the other hand, when the voltage exceeds the threshold, the deterioration is remarkable and it is estimated that a failure level has been reached. Thus, in order to stop the water electrolysis system, the determination in step S16 is Yes, and the process proceeds to step S18 via step S17.

Here, the specific value of the threshold is not particularly limited, and a threshold obtained experimentally can be used.

### 2.1.9. Step S18

In step S18, when it is determined to stop the water electrolysis system, the operation of the water electrolysis system 10 is stopped. Stopping the water electrolysis treatment can be done as usual, and the application of voltage from the power supply 21 is stopped.

### 2.2. Stop Processing

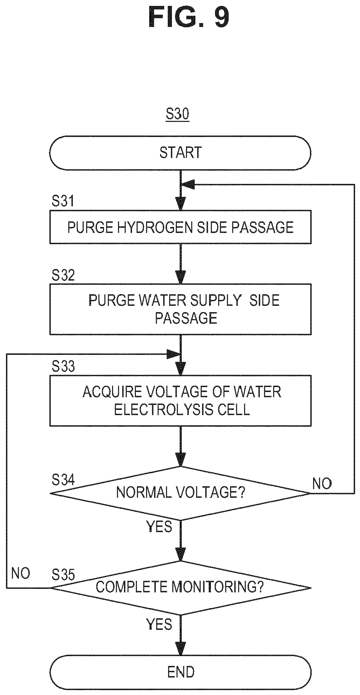

Although the stop processing can be performed normally as in step S18 described above, when there is no accompanying water on the hydrogen generating electrode side of the water electrolysis cell during the stop processing, the fuel cell reaction (power generation reaction) may occur in the water electrolysis cell. This reaction can deteriorate the catalyst in the hydrogen electrode catalyst layer. Therefore, in this embodiment, in the stop processing, it is monitored whether the fuel cell reaction has occurred, and when it has occurred, processing is performed to quickly resolve the reaction. FIG. 9 illustrates a flow of control S30 of the stop processing. As can be seen from FIG. 9, the control S30 includes steps S31 to S35.

### 2.2.1. Step S31

In step S31, the hydrogen side passage is purged. Accompanying water is discharged from the hydrogen side passage by purging the hydrogen side passage. In this embodiment, the control device 23 opens a valve (not illustrated) provided on the hydrogen side passage to purge the accompanying water from the hydrogen side passage. This reduces the hydrogen pressure on the hydrogen generating electrode side of the water electrolysis cell 13. Here, the accompanying water is purged while applying a voltage to the water electrolysis cell 13 by the power supply 21. In this case, the current density is set to 0.5 A/cm$^2$ or less, and the electrolysis operation is performed under the condition that a certain level or more of hydrogen cross leakage does not occur (or hydrogen generation is minimized), and the time is set to a short time of several seconds to several minutes. This purging of accompanying water from the hydrogen electrode can suppress the occurrence of the fuel cell reaction described above.

In this case, it may be performed while injecting an inert gas such as nitrogen into the hydrogen generating electrode side of the water electrolysis stack 12.

### 2.2.2. Step S32

In step S32, the water supply side passage is purged. Purging the water supply side passage discharges oxygen from the water supply side passage. The pump 31 sends pure water to the water electrolysis stack 12 by the control device 23, and oxygen remaining in the water electrolysis stack 12 is discharged to the gas-liquid separator 32 along with water electrolysis. As a result, the oxygen pressure on the oxygen generating electrode side of the water electrolysis cell 13 can be lowered.

### 2.2.3. Step S33

The voltage of the water electrolysis cell 13 is acquired by the cell monitor 22 in step S33. In this embodiment, the voltage is acquired for each of the voltage sensors 22a. The acquired voltage data is transmitted to the control device 23 as a signal.

As described above, in this embodiment, the voltage is acquired for each of the water electrolysis cells 13 or for each group of the plurality of water electrolysis cells, and the voltage is acquired for each stacked position of the water electrolysis cells 13.

### 2.3.4. Step S34

In step S34, it is determined whether the voltage of the water electrolysis cell 13 obtained in step S33 is normal. As described above, when the fuel cell reaction (power generation reaction) occurs in the water electrolysis cell during the stop processing, the catalyst in the hydrogen electrode catalyst layer may deteriorate, but whether this fuel cell reaction is occurring can be determined by the voltage of the water electrolysis cell 13. That is, when a voltage (re-rise) of a predetermined voltage (for example, 0.1 V to 1.0 V per water electrolysis cell) or more is detected during the stop processing, it can be determined that the reaction has occurred.

Therefore, in step S34, when the voltage of the water electrolysis cell 13 acquired in step S33 is equal to or lower than the set voltage, the voltage is normal, so the determination is Yes, and the process proceeds to step S35. On the other hand, when the voltage of the water electrolysis cell 13 acquired in step S33 is higher than the set voltage, the voltage is not normal and the fuel cell reaction is occurring, so it is determined as No, and the process proceeds to step S31 to perform hydrogen side passage purging again.

2.3.5. Step S35

In step S35, it is determined whether to complete monitoring when it is determined in step S34 that the voltage is normal. The completion of monitoring is determined by whether the stop processing of the water electrolysis system 10 has been completed, and when it is completed, it is determined as Yes and the process ends. On the other hand, when the stop processing has not been completed, it is determined as No and the process returns to step S33 to continue monitoring.

2.3.6. Others

When there is a cross leakage or a short circuit in the water electrolysis cell 13 during the stop processing, a sudden drop in voltage of the water electrolysis cell is observed immediately after the voltage application by the power supply 21 is stopped for the stop processing. Therefore, when the voltage of the water electrolysis cell becomes lower than the threshold within a certain period of time after the voltage application by the power supply 21 is stopped, the stop processing can be configured to notify that fact.

3. Effects etc.

With the water electrolysis system 10 of this embodiment and its control S10, failures such as a short circuit in the water electrolysis cell 13 can be detected at an early stage, so it is easy to specify the water electrolysis cell 13 that is causing a problem. Thus, failures can be detected with higher accuracy, and the water electrolysis system 10 can be quickly stopped if necessary. Also, it is possible to do this during the electrolytic reaction.
When the control S30 is used, deterioration in the water electrolysis cell can be suppressed while the water electrolysis system 10 is stopped.

**Claims**

1. A water electrolysis system (10) that obtains hydrogen by water electrolysis with a water electrolysis cell (13), the water electrolysis system (10) comprising:

   a water electrolysis stack (12) having a plurality of water electrolysis cells (13);
   a water supply side passage (30) that supplies water to the water electrolysis stack (12);
   a hydrogen side passage (40) that discharges the hydrogen obtained in the water electrolysis stack (12) from the water electrolysis stack (12);
   a plurality of voltage sensors (22a) that measures voltages for the respective water electrolysis cells (13) or for each group of the water electrolysis cells (13); and
   a control device (23), wherein
   the control device (23) is configured to acquire a voltage from each of the voltage sensors (22a), determine whether the voltage is lower than a predetermined value and notify that the water electrolysis cell (13) has a failure when it is determined that the voltage is lower than the predetermined value.

2. The water electrolysis system (10) according to claim 1, wherein the predetermined value is a voltage value obtained from an equivalent circuit of the water electrolysis cell (13).

3. The water electrolysis system (10) according to claim 1 or 2, wherein:

   the control device (23) is configured to determine whether the voltage is lower than the predetermined value at a start of operation of the water electrolysis system (10);
the predetermined value is a normal water electrolysis cell voltage corresponding to a current acquired in advance; and
the control device (23) compares the normal water electrolysis cell voltage with the voltage obtained from the voltage sensor (22a), and determines that a short-circuit abnormality has occurred in the water electrolysis cell (13) when the voltage is lower than an allowable voltage.

4. The water electrolysis system (10) according to claim 1, wherein:

the control device (23) is configured to determine whether the voltage is lower than the predetermined value during a steady operation of the water electrolysis system (10);
the predetermined value is a lower limit of a width of an I-V characteristic of the water electrolysis cell (13) that is acquired in advance; and
the control device (23) is configured to determine that a short-circuit abnormality has occurred in the water electrolysis cell (13) when a voltage lower than the lower limit of the width of the I-V characteristic is detected.

5. The water electrolysis system (10) according to claim 4, wherein:

the control device (23) is configured to stop an operation of the water electrolysis system (10) when a voltage higher than a predetermined threshold is detected; and
the predetermined threshold is a value higher than an upper limit of the width of the I-V characteristic.

6. The water electrolysis system (10) according to claim 5, wherein the control device (23) is configured to continue the operation of the water electrolysis system (10) when a voltage below the predetermined threshold and above the upper limit of the width of the I-V characteristic is detected.

7. The water electrolysis system (10) according to any one of claims 3 to 5, wherein the control device (23) is configured to stop the operation of the water electrolysis system (10) when it is determined that the short-circuit abnormality occurs in the water electrolysis cell (13).

# FIG. 1

WATER SUPPLY SIDE PASSAGE
(OXYGEN SIDE PASSAGE)

HYDROGEN SIDE PASSAGE

10

30

40

OXYGEN

33

31

11

13

12

HYDROGEN

22

21

32

23

41

42

# FIG. 2

# FIG. 3

# FIG. 4

# FIG. 5

S10

START

S11 — APPLY VOLTAGE

S12 — ACQUIRE VOLTAGE OF WATER ELECTROLYSIS CELL

S13 — CHARGING?
- YES → S19
- NO → S14

S14 — IV COMPARISON CALCULATION

S19 — VOLTAGE COMPARISON CALCULATION

S15 — NORMAL VOLTAGE IN STEADY OPERATION?
- YES (loop back)
- NO → S16

S20 — NORMAL VOLTAGE IN START OF OPERATION?
- YES (loop back)
- NO → S21

S16 — STOP LEVEL?
- NO → S22
- YES → S17

S21 — NOTIFY

S22 — NOTIFY

S17 — NOTIFY

S18 — STOP PROCESSING

END

# FIG. 6

# FIG. 7

MEASURED VOLTAGE VALUE OF WATER
ELECTROLYSIS CELL

CALCULATED VOLTAGE
VALUE OF WATER ELECTROLYSIS
CELL BASED ON EQUIVALENT
CIRCUIT

Vcell
Vcell_sim
current_density
(A/cm²)

CURRENT DENSITY

TIME

# FIG. 8

# FIG. 9

S30

START

S31
PURGE HYDROGEN SIDE PASSAGE

S32
PURGE WATER SUPPLY SIDE PASSAGE

S33
ACQUIRE VOLTAGE OF WATER ELECTROLYSIS CELL

S34 NORMAL VOLTAGE? NO

YES

NO S35 COMPLETE MONITORING?

YES

END

Europäisches
Patentamt

European
Patent Office

Office européen
des brevets

# EUROPEAN SEARCH REPORT

Application Number

EP 23 21 1989

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2020 196906 A (TOYOTA CENTRAL RES & DEV) 10 December 2020 (2020-12-10) <br> * claims 1-5 * <br> * paragraphs [0010] - [0092] * | 1-7 | INV. <br> C25B1/04 <br> C25B15/023 <br> C25B15/06 |
| X | JP 2009 022868 A (MIURA KOGYO KK; MIURA PROTEC KK) 5 February 2009 (2009-02-05) <br> * claims 1-6 * <br> * paragraphs [0013] - [0085] * | 1-7 | |
| X | US 8 114 265 B2 (BERRIAH SAID [CA]; VEILLETTE MICHEL [CA] ET AL.) 14 February 2012 (2012-02-14) <br> * claims 1, 2, 7, 12-14, 18 * <br> * column 3, line 17 - column 9, line 12 * | 1-7 | |
| X | CN 115 522 227 A (SUNGROW POWER SUPPLY CO LTD) 27 December 2022 (2022-12-27) <br> * claims 1-13 * | 1-7 | |
| X | US 2006/289312 A1 (TREMBLAY GILLES [CA] ET AL) 28 December 2006 (2006-12-28) <br> * claims 1-16 * <br> * paragraphs [0027] - [0052] * | 1-7 | **TECHNICAL FIELDS SEARCHED (IPC)** <br><br> C25B |
| X | CN 113 604 815 A (THE 718TH RES INSTITUTE OF CHINA SHIPBUILDING INDUSTRY CORPORATION) 5 November 2021 (2021-11-05) <br> * claims 1-10 * | 1-7 | |
| X | US 2021/222309 A1 (BERRIAH SAID [CA] ET AL) 22 July 2021 (2021-07-22) <br> * claims 1-8, 10-17, 19, 20 * <br> * paragraphs [0018] - [0058] * | 1-7 | |

The present search report has been drawn up for all claims

| Place of search | Date of completion of the search | Examiner |
|---|---|---|
| Munich | 14 June 2024 | Perednis, Dainius |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 21 1989

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2024

| Patent document cited in search report | | Publication date | Patent family member(s) | | Publication date |
|---|---|---|---|---|---|
| JP 2020196906 | A | 10-12-2020 | JP | 7275868 B2 | 18-05-2023 |
| | | | JP | 2020196906 A | 10-12-2020 |
| JP 2009022868 | A | 05-02-2009 | NONE | | |
| US 8114265 | B2 | 14-02-2012 | AT | E542931 T2 | 15-02-2012 |
| | | | EP | 2006418 A2 | 24-12-2008 |
| | | | ES | 2379405 T3 | 25-04-2012 |
| | | | PL | 2006418 T3 | 31-07-2012 |
| | | | PT | 2006418 E | 23-04-2012 |
| | | | US | 2009014326 A1 | 15-01-2009 |
| CN 115522227 | A | 27-12-2022 | NONE | | |
| US 2006289312 | A1 | 28-12-2006 | EP | 1910588 A1 | 16-04-2008 |
| | | | ES | 2675333 T3 | 10-07-2018 |
| | | | HU | E039443 T2 | 28-12-2018 |
| | | | PL | 1910588 T3 | 31-10-2018 |
| | | | PT | 1910588 T | 23-07-2018 |
| | | | TR | 201808245 T4 | 23-07-2018 |
| | | | US | 2006289312 A1 | 28-12-2006 |
| | | | WO | 2006133562 A1 | 21-12-2006 |
| CN 113604815 | A | 05-11-2021 | NONE | | |
| US 2021222309 | A1 | 22-07-2021 | CA | 3105842 A1 | 16-07-2021 |
| | | | CN | 113136592 A | 20-07-2021 |
| | | | EP | 3851560 A1 | 21-07-2021 |
| | | | JP | 2021113357 A | 05-08-2021 |
| | | | JP | 2023116434 A | 22-08-2023 |
| | | | US | 2021222309 A1 | 22-07-2021 |

EPO FORM P0459

For more details about this annex : see Official Journal of the European Patent Office, No. 12/82

**EP 4 403 671 A1**

**Patent documents cited in the description**

- JP 2020084259 A